(19) Europäisches Patentamt
European Patent Office
Office européen des brevets

(11) EP 1 921 563 A2

(12) EUROPEAN PATENT APPLICATION

(43) Date of publication:
14.05.2008 Bulletin 2008/20

(51) Int Cl.:
*G06K 7/00* (2006.01)

(21) Application number: 07119019.3

(22) Date of filing: 22.10.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 23.10.2006 JP 2006287883

(71) Applicant: Fujitsu Ltd.
Kawasaki-shi, Kanagawa 211-8588 (JP)

(72) Inventors:
• Sugano, Hiroyasu
Kawasaki-shi, Kanagawa 211-8588 (JP)

• Matsui, Kazuki
Kawasaki-shi, Kanagawa 211-8588 (JP)
• Kihara, Hideto
Kawasaki-shi, Kanagawa 211-8588 (JP)
• Matsuda, Masahiro
Kawasaki-shi, Kanagawa 211-8588 (JP)

(74) Representative: Stebbing, Timothy Charles
Haseltine Lake
5th Floor Lincoln House
300 High Holborn
London, WC1V 7JH (GB)

(54) **Communication method, communication system, access control apparatus, and computer readable storage medium**

(57) Identification information for identifying IC tags 1 is recorded in association with time information expressing the time (timing) at which access using a first antenna 3 is gained, for example, the time from when antennas are switched to when the access is gained, and position information representing the positions of the antenna with respect to the direction of movement of the IC tags. Identification information is selected on the basis of time for switching to a second antenna arranged downstream of the first antenna, the recorded time information, the position of the second antenna, and the recorded position information, and the IC tags are accessed using the second antenna, on the basis of the selected identification information. When the IC tags are accessed by the plurality of antennas arranged along the moving path of the IC tags, failure of access can be prevented, and overall efficiency can be improved.

FIG. 1A

FIG. 1B

ACCESS CONTROL APPARATUS

**Description**

BACKGROUND

1. Field of the Invention

The present invention relates to a communication method of accessing each of a plurality of IC tags two or more times by using a plurality of antennas arranged along a moving path of an IC tag, a communication system to which the communication method is applied, an access control apparatus used in the communication system, and a computer program product to realize the access control apparatus. In particular, the present invention relates to a communication method, a communication system, an access control apparatus, and a computer program product which make it possible to efficiently access a large number of IC tags moving at a high speed.

2. Description of Related Art

In recent years, an RFID (Radio Frequency Identification) system which performs management of distribution of articles by using an IC tag (RFID tag). In the RFID system, information is read from and/or written on IC tags stuck on articles such as parts, products, storage boxes, and the like to identify the articles from each other, and the identified articles are managed. In particular, passive type IC tags the size and prices of which can easily reduced are suitable for management of a large number of articles.

The passive type IC tag has no internal electrical power source, and operates on the basis of various schemes such as an electromagnetic induction scheme which operates a tag by electromotive force of electromagnetic induction generated by an electromagnetic wave in a long- or medium-wave band output from an external antenna or a microwave scheme which operates by electromotive force generated by an electric wave in a microwave band. A reader/writer is connected to the antenna. Communication between the antenna and the IC tag is performed on the basis of control of the access control apparatus which controls access by the reader/writer to read and/or write information from/on the IC tag.

For example, in a site of a factory or a warehouse, access may be performed to IC tags stuck on each of a plurality of moving articles conveyed by a conveyer such as a belt conveyer or a fork lift truck. In this case, when the IC tags move at a high speed, the probability of failing to access increases. In contrast to this, when the moving speed is lowered, the failure of access is eliminated, but overall efficiency is disadvantageously deteriorated.

Therefore, a communication system which arranges a plurality of antennas along a moving path not to deteriorate the overall efficiency and accesses a plurality of moving IC tags is disclosed in Japanese Unexamined Patent Publication No.2006-106897 (Japanese Patent Application Laid-Open No. 2006-106897).

However, as described above, even though the plurality of antennas are arranged, when a moving speed of the IC tags increases, or when the number of IC tags increases, the probability of failing to access increases as a matter of course. For example, in situations that the system tries to access an IC tag outside cover areas of the antennas or just passing through the cover areas, the system cannot normally access the IC tag.

SUMMARY

The present invention has been made in consideration of the above circumstances, and has as its main object to provide a communication method which prevents failure of access to improve overall efficiency, a communication system to which the communication method is applied, an access control apparatus used in the communication system, and a computer program product to realize the access control apparatus.
In order to achieve the above objects, straightforwardly, the following configuration is employed. That is, for example, an elapsed time from antenna switching time measured at time of the first access trial for collecting identification information of an IC tag to time when the collection is succeeded is associated with the collected identification information as time information, and, for example, identification information is selected on the basis of the time information at the second access for reading or writing information from/on IC tags to make it possible to access the respective IC tags at optimum times, respectively.

The present invention employs the following configuration. Positions of antennas which gain the first access with respect to moving directions of IC tags are associated with the identification information as position information, and identification information is selected on the basis of the position information at the second access to make it possible to start out access to the IC tags from an antenna which is expected to easily access the IC tags based on the position information.

A communication method of accessing each of a plurality of IC tags at least twice by using a plurality of antennas arranged along a moving path of the IC tags, according to a first aspect is characterized by comprising: performing first access to each of the IC tags by using some of the plurality of antennas; giving time information expressing time at which the first access to each of the IC tags is gained to each of the IC tag as a time attribute; selecting an IC tag to be accessed on the basis of time at which second access to each of the IC tags is performed by using some of the plurality of antennas and the time attribute given to the IC tag; and performing the second access to the selected IC tag by using an antenna to be used in the second access.

A communication method of accessing each of a plurality of IC tags at least twice by using a plurality of antennas arranged along a moving path of the IC tags, according to a second aspect is characterized by comprising: performing first access to each of the IC tags by using a first antenna which is one of the plurality of antennas; giving time information expressing time at which the first access to each of the IC tags is gained to each of the IC tag as a time attribute; selecting an IC tag to be accessed on the basis of time at which second access to each of the IC tags is performed by using a second antenna which is one of the plurality of antennas and the time attribute given to the IC tag; and performing the second access to the selected IC tag by using the second antenna.

A communication method of accessing each of a plurality of IC tags at least twice by using a plurality of antennas arranged along a moving path of the IC tags, according to a third aspect is characterized by comprising: performing first access to each of the IC tags by using some of the plurality of antennas; giving position information expressing a position of an antenna which gains the first access to the IC tag with respect to a moving direction of the IC tags to each of the IC tag as a spatial attribute; selecting an IC tag to be accessed on the basis of positions of antennas which are some of the plurality of antennas and a spatial attribute given to each of the IC tags; and performing the second access to the selected IC tag by using an antenna to be used in the second access.

A communication method of accessing each of a plurality of IC tags at least twice by using a plurality of antennas arranged along a moving path of the IC tags, according to a fourth aspect is characterized by comprising: performing first access to each of the IC tags by using a first antenna which is one of the plurality of antennas; giving position information expressing a position of an antenna which gains the first access to the IC tag with respect to a moving direction of the IC tags to each of the IC tag as a spatial attribute; selecting an IC tag to be accessed on the basis of positions of second antennas which are some of the plurality of antennas and perform second access and a spatial attribute given to each of the IC tags; and performing the second access to the selected IC tag by using the second antennas.

A communication system which includes a plurality of antennas arranged along a moving path of an IC tag, and an access control apparatus which causes the plurality of antennas to access the IC tag to access each of a plurality of IC tags at least twice, according to a fifth aspect is characterized in that the access control apparatus comprises: first access part which causes a first antenna which is one of the plurality of antennas to perform first access to each of the IC tags; time information acquiring part which acquires time information expressing time at which the first access using the first antenna is gained for each of the IC tags; identification information recording part which records the time information acquired by the time information acquiring part and identification information for identifying each of the IC tags in association with each other; identification information selecting part which selects identification information of an IC tag to be accessed on the basis of time (timing) at which second access to each of the IC tags is performed by using a second antenna which is one of the plurality of antennas and time information recorded for each of the IC tags; and second access part which causes the second antenna to perform the second access to each of the IC tags on the basis of the identification information selected by the identification information selecting part.

A communication system which includes a plurality of antennas arranged along a moving path of an IC tag, and an access control apparatus which recognizes arranged positions of the plurality of antennas and causes the plurality of antennas to access each of a plurality of IC tags at least twice, according to a sixth aspect is characterized in that the access control apparatus comprises: first access part which causes a first antenna which is one of the plurality of antennas to perform first access to each of the IC tags; identification information recording part which records a position of the first antenna which gains the first access with respect to a moving direction of each of the IC tags as position information in association with identification information for identifying the IC tag, identification information selecting part which selects identification information of an IC tag to be accessed on the basis of positions of a second antenna which is one of the plurality of antennas and performs second access with respect to moving directions of the IC tags and position information recorded for each of the IC tags by the identification information recording part; and second access part which causes the second antenna to perform the second access to each of the IC tags on the basis of the identification information selected by the identification information selecting part.

A communication system which includes a plurality of antennas arranged along a moving path of an IC tag, and an access control apparatus which recognizes arranged positions of the plurality of antennas and causes the plurality of antennas to access each of a plurality of IC tags at least twice, according to a seventh aspect is characterized in that the access control apparatus comprises: first access part which causes a first antenna which is one of the plurality of antennas to perform first access to each of the IC tags; time information acquiring part which acquires time information expressing time at which first access using the first antenna is gained for each of the IC tags; identification information recording part which records the time information acquired by the time information acquiring part, position information expressing a position of the first antenna with respect to a moving direction of each of the IC tags, and identification information for identifying the IC tags in association with each other; and identification information selecting part which selects identification information of an IC tag to be accessed on the basis of time at which second access to each of the IC tags is performed by using a second antenna which is one of the plurality of antennas, time information recorded for each of the IC tags, positions of the second antenna with respect to moving directions of each of the IC tags, and position information recorded for each of the IC tags; and second access part which causes the second antenna to perform the second access to each of the IC tags on the basis of the identification information selected by the identification information selecting part.

A communication system according to an eighth aspect is characterized in that the first access part collects identification information of each of the IC tags, and the second access part reads or writes information from/on each of the IC tags on the basis of the identification information collected by the first access part.

An access control apparatus which accesses each of a plurality of IC tags at least twice through a plurality of antennas arranged along a moving path of IC tags, according to a ninth aspect is characterized by comprising: first access part which causes a first antenna which is one of the plurality of antennas to perform first access to the IC tags; time information acquiring part which acquires time information expressing time at which the first access using the first antenna is gained for each of the IC tags; identification information recording part which records the time information acquired by the time information acquiring part and identification information for identifying each of the IC tags in association with each other; identification information selecting part which selects identification information of an IC tag to be accessed on the basis of time at which second access to each of the IC tags is performed by using a second antenna which is one of the plurality of antennas and time information recorded on each of the IC tags; and second access part which causes the second antenna to perform the second access to each of the IC tags on the basis of the identification information selected by the identification information selecting part.

An access control apparatus which recognizes positions at which a plurality of antennas are arranged along a moving path of IC tags to access each of the plurality of IC tags at least twice through the antennas, according to a tenth aspect is characterized by comprising: identification information recording part which records a position of the first antenna which gains first access with respect to a moving direction of each of the IC tags as position information in association with identification information for identifying the IC tags; identification information selecting part which selects identification information of an IC tag to be accessed on the basis of positions of a second antenna which is one of the plurality of antennas and performs second access with respect to moving directions of each of the IC tags and position information recorded for each of the IC tags by the identification information recording part; and second access part which causes the second antenna to perform the second access to each of the IC tags on the basis of the identification information selected by the identification information selecting part.

A computer readable storage medium storing a program which access a plurality of IC tags at least twice through a plurality of antennas arranged along a moving path of the IC tags, according to an eleventh aspect is characterized by causing a computer to function as: acquiring time information expressing time at which first access using a first antenna which is one of the plurality of antennas is gained; recording the acquired time information and identification information for identifying the IC tags in association with each other; selecting identification information of an IC tag to be accessed on the basis of time at which second access to each of the IC tags is performed by using a second antenna which is one of the plurality of antennas and time information recorded on each of the IC tags; and performing second access to each of the IC tags by using the second antenna on the basis of the selected identification information..

A computer readable storage medium according to a twelfth aspect is characterized by causing a computer to function as: recording a position of a first antenna which gains the first access to each of the IC tags and which is one of the plurality of antennas with respect to a moving direction of each of the IC tags as position information in association with identification information for identifying the IC tags; selecting identification information of an IC tag to be accessed on the basis of positions of a second antenna which is one of the plurality of antennas and which is used in second access with respect to moving directions of the IC tags and position information recorded for each of the IC tags; and performing second access to each of the IC tags by using the second antenna on the basis of the selected identification information.

According to the present invention described above, in association with time at which access by using a first antenna is gained, more concretely, time information expressing elapsed time from the antenna switching to when the access is gained, identification information which identifies an IC tag is recorded. On the basis of time at which access should be performed and time information given to an IC tag, identification information is selected, and the IC tag is accessed by using a second antenna which is the same as the first antenna or different from the first antenna on the basis of the selected identification information. For example, an antenna arranged on a downstream side of the first antenna is defined as the second antenna, identification information is selected on the basis of elapsed time after switching to the second antenna and recorded time information, and the IC tag is accessed by using the second antenna on the basis of the selected identification information.

With the above configuration, in the present invention, since an IC tag which can be most expectedly accessed at the time of access trial can be selected, respective IC tags can be accessed at optimum times, respectively. Therefore, failure of access can be decreased, and overall efficiency including shortening of time for accessing the IC tags can be improved.

According to the present invention as described above, in association with position information expressing the position of the first antenna by which an IC tag is accessed with respect to moving directions of IC tags, identification information which identifies the IC tag is recorded. On the basis of a position of the second antenna which is the same as the first antenna or different from the first antenna and the pieces of recorded position information of the IC tags, identification information is selected. An IC tag is accessed by using the second antenna on the basis of the selected identification information.

With the above configuration, in the present invention, since an IC tag which is accessed at the same position with respect to the moving directions of the IC tags can be selected, when an easily accessible antenna arranged at a position having actual achievement of access to the IC tags, for example, the first antenna is arranged on the right of the moving directions of the IC tags, access can be started from the second antenna arranged on the right like the first antenna. Therefore, failure of access is prevented, and overall efficient including shortening of time for accessing the IC tags can be improved.

Furthermore, according to the present invention as described above, identification information is selected on the basis of position information and time information to make it possible to start access to an IC tag from an optimum antenna at optimum time. Therefore, failure of access is prevented, and overall efficiency including shortening of time for accessing IC tags can be improved.

The above and further objects and features of the invention will more fully be apparent from the following detailed description with accompanying drawings.

## BRIEF DESCRIPTION OF THE SEVERAL VIEWS OF THE DRAWINGS

FIG. 1A and FIG. 1B are conceptual diagrams showing a configuration of a communication system according to the present invention;

FIG. 2 is a block diagram showing a configuration of an IC tag, an antenna, and a reader/writer used in the communication system according to the present invention;

FIG. 3 is a block diagram showing a configuration of an access control apparatus used in the communication system according to the present invention;

FIG. 4 is an explanatory diagram conceptually showing an example of recording contents of a tag table held by the access control apparatus used in the communication system according to the present invention;

FIG. 5 is a functional block diagram showing an example of the access control apparatus used in the communication system according to the present invention;

FIG. 6 is a flow chart showing an example of an identification information collecting process of the access control apparatus used in the communication system according to the present invention; and

FIG. 7 is a flow chart showing an example, of a job executing process of the access control apparatus used in the communication system according to the present invention.

## DETAILED DESCRIPTION

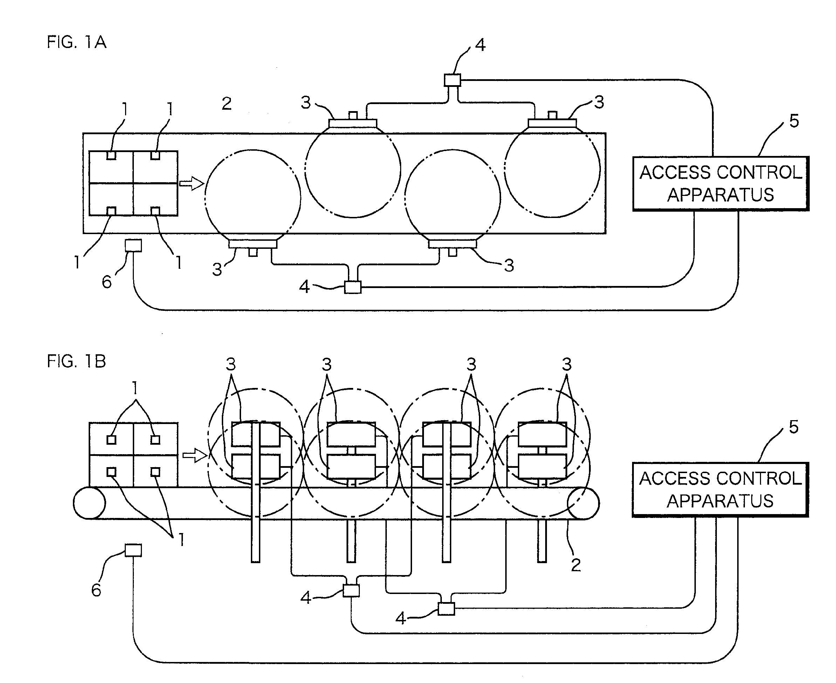

The present invention will be described below in detail with reference to the accompanying drawings. FIG. 1A and FIG. 1B are conceptual diagrams showing a configuration of a communication system according to the present invention. FIG. 1A is a plan view of a communication system according to the present invention when viewed from above, and FIG. 1B is a side view of the communication system. In FIG. 1A and FIG. 1B, reference numeral 1 denotes a passive IC tag (RFID tag). The IC tags 1 are stuck on articles such as parts, products, and storage boxes respectively, and conveyed by a conveying device 2 such as a belt conveyer in a direction indicated by an arrow in FIG. 1A and FIG. 1B. This direction is called a moving direction.

Along a moving path of the IC tags 1 conveyed by the conveying device 2, a plurality of antennas 3 are arranged. In the example shown in FIG. 1A and FIG. 1B, antenna tables each having the two antennas 3 installed on upper and lower sides are alternately arranged on the right and left sides with respect to the moving path. In FIG. 1A and FIG. 1B, an area indicated by a chain double-dashed line is a cover area (communication area) of each of the antennas 3. More specifically, the antennas 3 can access the IC tags 1 located in the cover areas, respectively.

Reader/writers 4 which read and write information from/on the IC tags 1 through the antennas 3 are connected to the antennas 3, respectively. An access control apparatus 5 using a computer such as a host computer controls the reader/writers 4 to read and write tag data using the antennas 3. One antenna 3 may be connected to one reader/writer 4, or a plurality of antennas 3 may be connected to the reader/writer 4.

A sensor 6 which detects moving status such as a moving speed and a present position of each of the IC tags 1 are connected to the access control apparatus 5. By the detection by the sensor 6, the access control apparatus 5 can recognize the moving status of the IC tags 1.

Here is an example in which the conveying device 2 is a belt conveyer which linearly conveys articles on which the IC tags 1 are stuck. However, the present invention is not limited to this example, and, as the conveying device 2, a belt conveyer which curvilinearly conveys the articles or a device such as a conveyer or a lift which vertically conveys the articles may be used. Furthermore, a device such as a fork lift truck may be used.

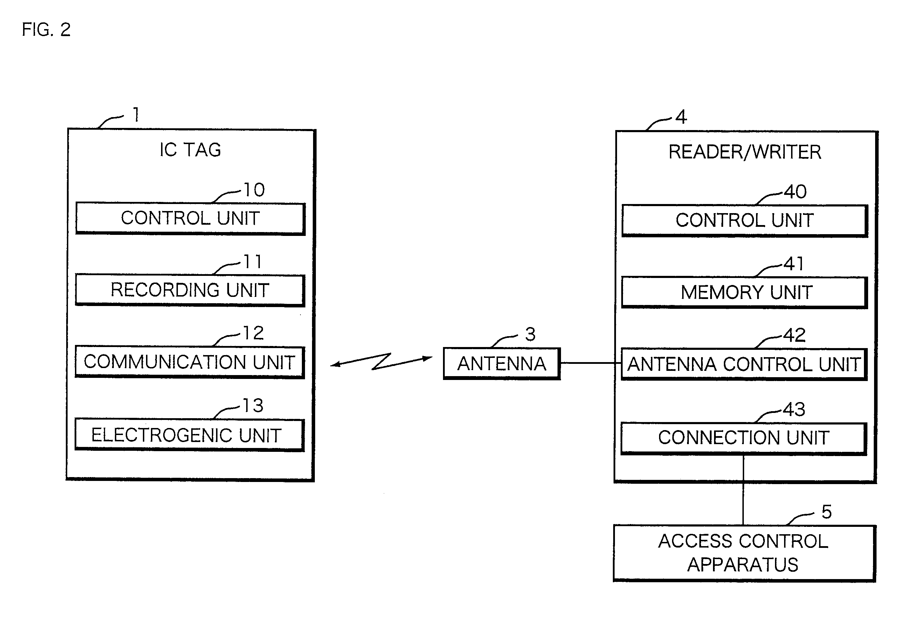

A configuration of various devices used in the communication system according to the present invention will be described below. FIG. 2 is a block diagram showing a configuration of the IC tags 1, the antennas 3, and the reader/writers 4 used in the communication system according to the present invention. The passive IC tag 1 includes control unit 10 such as a processor which controls the IC tag as a whole, a memory unit 11 such as a ROM or a RAM on which various programs executed by the control of the control unit 10, data, identification information for identifying the IC tag, and information received from the antenna 3 are recorded, a communication unit 12 which transmits and receives the various pieces of information to/from the antenna 3, and a electrogenic unit 13 which generates electromotive force on the basis of an electromagnetic wave output from the antenna 3.

The reader/writer 4 includes a control unit 40, a memory unit 41, an antenna control unit 42 for controlling the antennas 3, and a connection unit 43 connected to the access control apparatus 5. The reader/writer 4 causes the antenna control unit 42 to exchange various pieces of information with the IC tag 1 through the antenna 3. Information transmitted from the antennas 3 is output as an electromagnetic wave such as a long wave, a medium wave, or a microwave. The IC tag 1 generates electromotive force by various schemes such as an electromagnetic induction scheme which generates electromotive force by electromagnetic induction caused by an electromagnetic wave in a long- or medium-wave band or a microwave scheme which generates electromotive force by an electric wave in a microwave band.

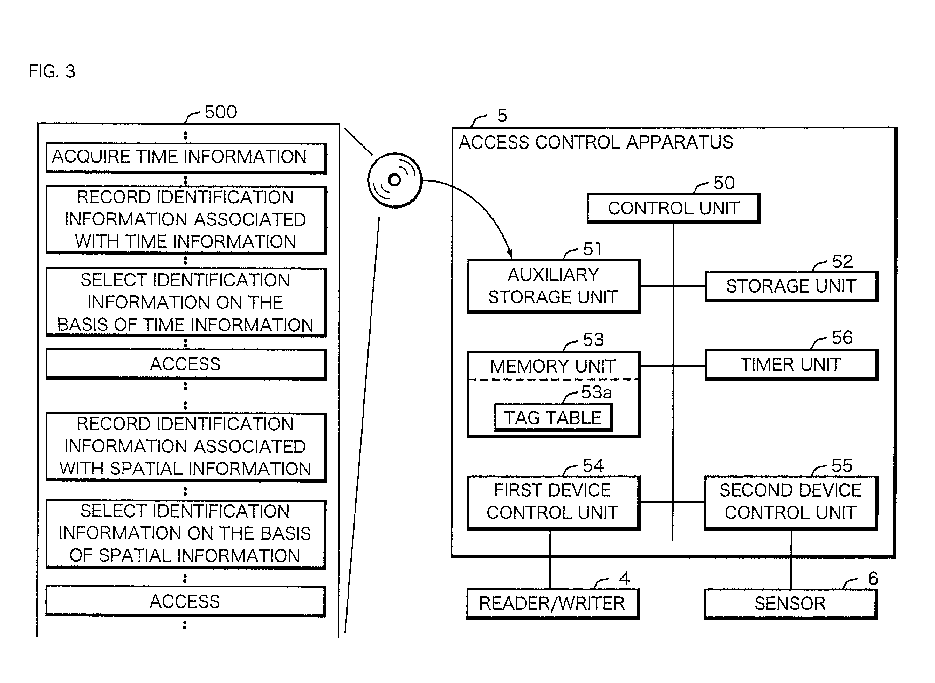

FIG. 3 is a block diagram showing a configuration of the access control apparatus 5 used in the communication system according to the present invention. The access control apparatus 5 which is basically a general-purpose computer system includes control unit 50 such as CPU which controls the entire apparatus, a auxiliary storage unit 51 such as a CD-ROM drive which reads various pieces of information from a recording medium such as a CD-ROM on which various pieces of information such as a computer program 500 and data are recorded, a storage unit 52 such as a hard disk on which the various pieces of information read from the auxiliary storage unit 51 are recorded, and a memory unit 53 such as a RAM in which information is temporarily stored. The computer program 500 recorded on the storage unit 52 is stored in the memory unit 53 and executed under control of the control unit 50, so that the computer operates as the access control apparatus 5 according to the present invention.

Furthermore, the access control apparatus 5 includes a first device control unit 54 connected to the reader/writers 4 to control the reader/writers 4, a second device control unit 55 connected to the sensor 6 to acquire a detection result of the sensor 6, and a timer unit 56 such as a timer circuit which measures time.

As information recorded on the storage unit 52, various pieces of information such as information representing positions at which the antennas 3 are arranged and information about moving conditions such as moving speeds of the IC tags 1 are used. The access control apparatus 5 can recognize the positions at which the antennas 3 are arranged on the basis of the information recorded on the storage unit 52. A part of the recording region of the storage unit 52 is used as a tag table 53a on which various pieces of information such as attributes given to the IC tags 1 and jobs (instructions) executed for the IC tags 1 are recorded in association with the pieces of identification information for identifying the IC tags 1.

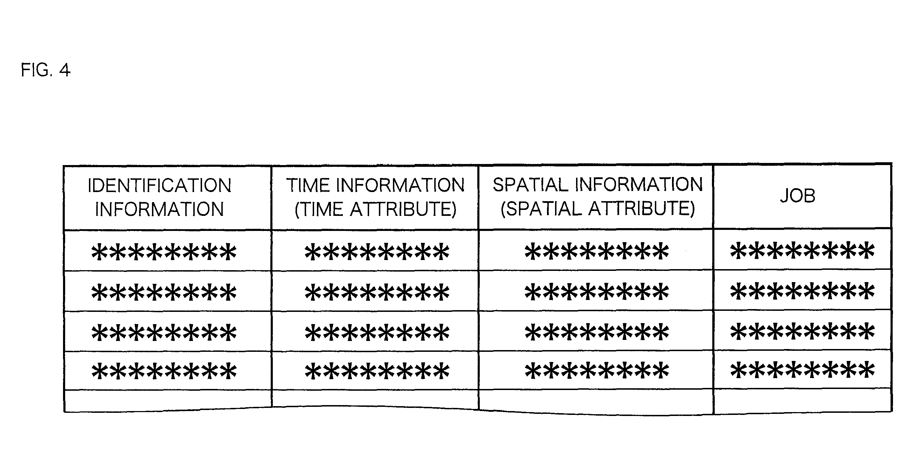

FIG. 4 is an explanatory diagram conceptually showing an example of recording contents of a tag table 53a held by the access control apparatus 5 used in the communication system according to the present invention. On the tag table 53a, various pieces of information are stored as a record, such as time attributes, spatial attributes, and jobs given to the IC tags 1, respectively, in association with the pieces of identification information of the IC tags 1. The time attribute is time information expressing time at which access to each of the IC tags 1 is gained, such as elapsed time from reference time set as a reference of access by the antennas 3. The spatial attribute is position information expressing a position of the antenna 3 which accesses each of the IC tags with respect to a moving direction of each of the IC tags 1. For example, when the position of each of the antenna 3 which accesses each of the IC tags 1 is an upper antenna 3 of the antennas 3 arranged in two levels on the right of the moving direction of the IC tag 1, the position information is expressed as "right, high". When the antenna 3 is a lower antenna arranged on the left, the position information is expressed as "left, low". The jobs are pieces of information representing instructions such as read (READ) and write (WRITE) and data used in the respective instruction or combinations of the instructions and the data.

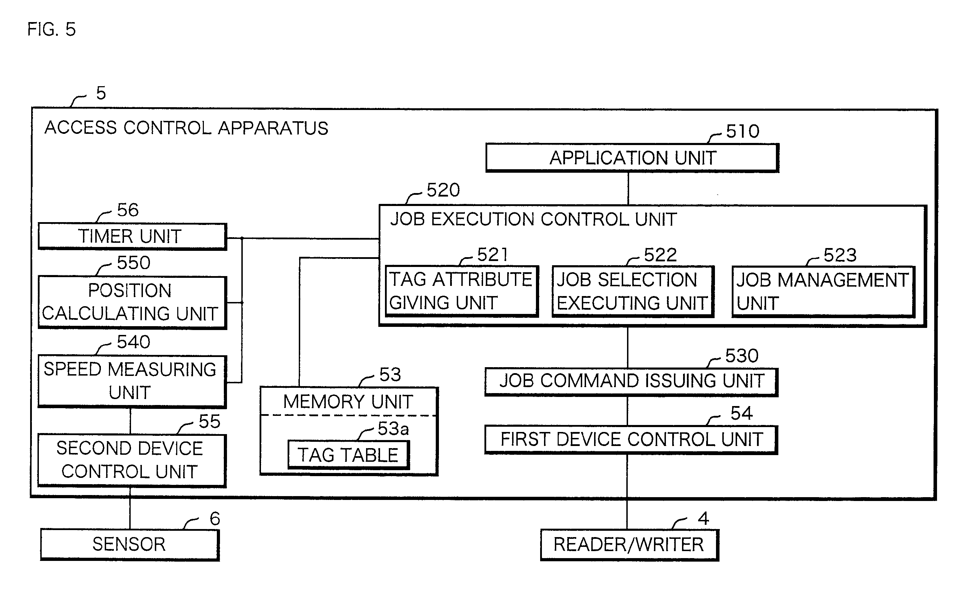

FIG. 5 is a functional block diagram showing an example of the access control apparatus 5 used in the communication system according to the present invention. In FIG. 5, functions of constituent elements such as various modules realized by executing the computer program 500 are shown as a functional block diagram. The access control apparatus 5 includes an application unit 510 which performs processes for step management, physical distribution management, product management, and the like. The application unit 510 issues a command (instruction) to exchange information with the IC tags 1.

Furthermore, the access control apparatus 5 includes a job execution control unit 520 which controls execution of a job on the basis of a command issued from the application unit 510, a job command issuing unit 530 which issues a job command such as identification information collection (inventory), reading, and writing and the like to the reader/ writer 4 through the first device control unit 54 on the basis of the control of the job execution control unit 520, a speed measuring unit 540 which acquires a detection result of the sensor 6 such as moving speeds or the like of the IC tags 1 through the second device control unit 55, and a position calculating unit 550 which calculates positional relationships between the IC tags 1 and the antennas 3 on the basis of the detected moving speeds and the positions of the antennas 3. The job execution control unit 520 further includes, as modules to control jobs, various modules such as a tag attribute giving unit 521 which gives the time attributes and the spatial attributes to the IC tags 1, a job selection executing unit 522 which selects a job to be executed, and a job management unit 523 which associates the jobs with the pieces of identification information of the IC tags 1.

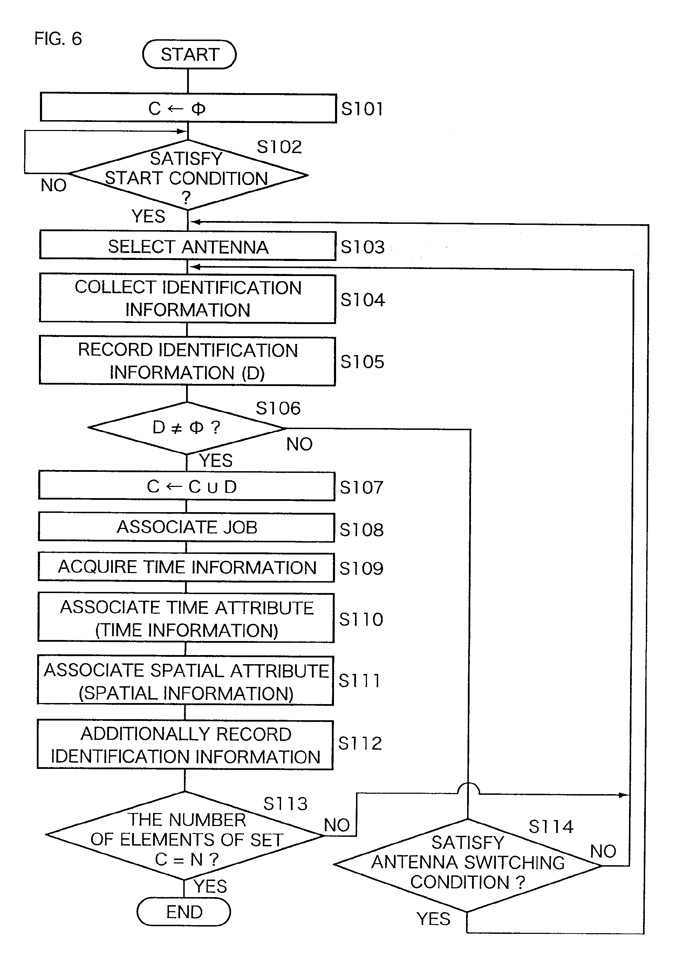

Processes of the various devices used in the communication system according to the present invention will be described below. The access control apparatus 5 according to the present invention performs various processes such as an identification information collecting (inventory) process, a job executing process, and the like to the IC tags 1. FIG. 6 is a flow chart showing an example of the identification information collecting process of the access control apparatus used in the communication system according to the present invention. The access control apparatus 5 firstly performs initialization as a preparing process for collecting identification by control of the control unit 50 which executes the computer program 500 (S101). The initialization in step S101 is actually a process of defining a set C set for the collected identification information as an empty set $\varphi$.

The access control apparatus 5 determines under control of the control unit 50 whether start conditions are satisfied (S102). More specifically, the process in step S102 is a process which determines whether predetermined start conditions serving as triggers such as start of conveyance of articles stuck with the IC tags 1, elapse of a predetermined period of time after the conveyance start operation, and passing of the conveyed articles through a predetermined position. Still more specifically, the determination is performed on the basis of various pieces of information such as moving speeds measured by the speed measuring unit 540, the positional relationships between the IC tags 1 and the antennas 3 calculated by the position calculating unit 550, and time indicated by the timer unit 56. When the start conditions are not satisfied in step S102 (S102: NO), after waiting for the predetermined period of time, the start conditions are determined again. More specifically, in step S102, the start conditions serving as triggers are determined every predetermined time interval.

In step S102, when it is determined that the start conditions are satisfied (S102: YES), the access control apparatus 5 selects the antenna 3 used in collection of identification information by the control of the control unit 50 (S103). In step S103, more specifically, one or more antennas 3 used in collection of identification information are selected from the plurality of antennas 3 arranged along a moving path of the IC tags 1 conveyed by the conveying device 2. At the stage in which conveyance of the articles stuck with the IC tags 1 is started, the antenna 3 arranged on the most upstream side with respect to the moving direction of the articles (conveying device 2) is selected. For example, as shown in FIG. 1A and FIG. 1B, when the two antennas 3 are vertically arranged on each of the antenna tables, in step S103, the two antennas 3 vertically arranged on the most upstream antenna table are selected.

The access control apparatus 5 collects pieces of identification information from the IC tags 1 by access using the selected antennas 3 under control of the control unit 50 (S104), and records the collected pieces of identification information on the storage unit 52 or the memory unit 53 (S105). In step S104, the selected antennas 3 transmit instructions to request transmission of the identification information to all the IC tags 1 located in the cover areas (communication areas) of the antennas 3, and the antennas 3 receives the pieces of identification information transmitted from the IC tags 1 in response to the transmitted instructions, so that the pieces of identification information are collected (possibly after some predetermined collision arbitration process). All the pieces of identification information are not always collected by executing the process once in step S104. In the next step S105, the identification information collected by executing the process once in step S104 are recorded as a set D.

The access control apparatus 5 determines whether the pieces of identification information are collected in step S104 under control of the control unit 50 (S106). The process in step S106, more specifically, is performed by determining whether the set D recorded in step S105 is an empty set $\varphi$.

In step S106, when it is determined that the pieces of identification information are collected, i.e., when it is determined that the set D is not the empty set $\varphi$ (S106: YES), the access control apparatus 5 adds the collected pieces of identification information to the set C under control of the control unit 50 (S107). More specifically, in step S107, a sum of the set C and the set D is calculated, and the calculated sum of sets serves as the set C.

The access control apparatus 5 associates jobs with the pieces of identification information collected as the set D in step S104 by the job management unit 523 (S108), acquires time information representing time at which the pieces of identification information are collected(S109), associates the acquired time information with the pieces of identification information as time attributes by the tag attribute giving unit 521 (S110), and associates position information representing the positions of the antennas 3 used in this collection with the pieces of identification information as spatial attributes by the tag attribute giving unit 521 (S111). In this manner, the respective pieces of identification information associated with the time information and the position information are additionally recorded on the tag table 53a of the storage unit 52.

The time information detected in step S 109 is information based on time measured by the timer unit 56. More specifically, when time at which the antenna 3 is selected is set as reference time, the time information is information representing elapsed time from the reference time to time at which the antennas 3 access the IC tags 1 to collect the pieces of identification information. The position information in step S111 is information such as "right, high" and "left, low" representing the positions of the antennas 3 which access the IC tags 1 with respect to a moving direction of the articles (conveying device 2). In step S112, recording is performed in a form serving as a job queue added with newly collected information without erasing the records recorded in the tag table 53a in advance.

The access control apparatus 5 determines whether pieces of identification information of all the IC tags 1 are collected under control of the control unit 50 (S113). The determination in step S113 is performed, specifically, by determining whether the number of elements constituting the set C is equal to a natural number N set as the number of IC tags 1 and one of parameters in the storage unit 52 in advance. When the number of elements of the set C is equal to the natural number N, it is determined that the pieces of identification information of all the IC tags 1 are collected. On the other hand, when the number of elements of the set C is less than the natural number N, it is determined that all the pieces of identification information are not collected.

In step S113, it is determined that the pieces of identification information of all the IC tags 1 are collected (S113: YES), the access control apparatus 5 ends the identification information collecting process under control of the control unit 50 to start a job executing process.

In step S106, when it is determined that the pieces of identification information are not collected at all, i.e., when it is determined that the set D is an empty set φ (S106: NO), the access control apparatus 5 determines whether antenna switching conditions are satisfied under control of the control unit 50 (S114). When the pieces of identification information are not collected at all in step S106, it is determined that the IC tags 1 may move out of the cover areas of the selected antennas 3. It is determined in step S114 whether it is time (timing) at which the antennas 3 are switched. The process in step S114 is, more specifically, determination for conditions serving as triggers for switching the antennas 3 such as time elapsed from when conveyance of the articles stuck with the IC tags 1 is started, time elapsed from the antennas 3 are switched, and a moving distance detected by the sensor 6. More specifically, determination is performed on the basis of information such as a moving speed measured by the speed measuring unit 540, the positional relationships between the IC tags 1 and the antennas 3 calculated by the position calculating unit 550, and time indicated by the timer unit 56.

When it is determined in step S114 that the antenna switching conditions are satisfied (S114: YES), the access control apparatus 5 returns the control process to step S103 under control of the control unit 50 to select the antennas 3 again (S103). Subsequently, the above processes are repeated. In the selection at the stage in step S103, the antenna 3 is arranged on the downstream side of the previous antenna 3.

When it is determined in step S114 that the antenna switching conditions are not satisfied (S114: NO), the access control apparatus 5 returns the control process to step S104 to collect the identification information again under control of the control unit 50 (S104). Subsequently, the above processes are repeated. Thereafter, the set D is updated by pieces of identification information to be newly collected.

When it is determined in step S113 that identification information of some of the IC tags 1 are not collected (S113: NO), the access control apparatus 5 returns the control process to step S104 under control of the control unit 50 to collect the pieces of identification information again (S104). Subsequently, the above processes are repeated. Thereafter, the set D is updated by pieces of identification information to be newly collected. In this manner, the identification information collecting process is performed.

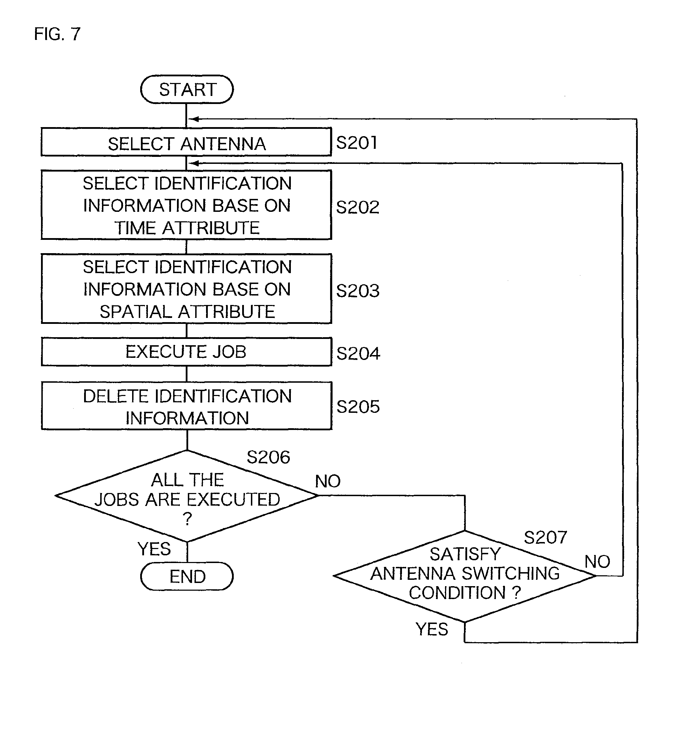

FIG. 7 is a flow chart showing an example of a job executing process of the access control apparatus 5 used in the communication system according to the present invention. The access control apparatus 5 firstly selects the antennas 3 under control of the control unit 50 which executes the computer program 500 (S201). More specifically, in step S201, one or more antennas 3 used in collection of pieces of identification information are selected from the plurality of antennas 3 arranged along a moving path of the IC tags 1 conveyed by the conveying device 2. At the stage in which the job executing process is started, since the antenna 3 are selected in advance in the identification collecting process, the antennas 3 are not switched, and the selected antennas 3 are continuously selected.

The access control apparatus 5 selects pieces of identification information of the IC tags 1 to be accessed from the pieces of identification information recorded on the tag table 53a by the process of the job selection executing unit 522 based on the control of the control unit 50 on the basis of time from switching time of the antennas 3 to present time at which the antennas 3 selected by the switching try to access the IC tags 1, i.e., time elapsed from when the antennas 3 are switched and the time attribute (time information) recorded on the tag table 53a (S202). In step S202, more specifically, identification information in which a difference between the time elapsed from when the antennas 3 are switched and the time indicated by the time attribute falls within a predetermined range is selected. Even if the selection is performed by determining the predetermined range, rearrangement may be performed by using, as a key, the difference between the time indicated by the time attribute and the elapsed time to select identification information having a difference ranking in the top predetermined number of differences.

The access control apparatus 5 selects the identification information of the IC tags 1 to be accessed from the pieces of identification information selected in step S202 by the process of the job selection executing unit 522 based on the control of the control unit 50 on the basis of positions of the selected antennas 3 with respect to a moving direction of the IC tags 1 stuck on the articles and positions indicated by spatial attribute (position information) recorded on the tag table 53a (S203). More specifically, in step S203, pieces of identification information of the IC tags 1 the positions of which are matched in the moving direction with respect to the antennas 3 used in access are selected. For example, when the position of the antenna 3 used in access with respect to the moving direction of the IC tags 1 is "right, high", identification information the spatial attribute (position information) of which is recorded on the tag table 53a as "right, high" is selected. Even though the positions indicated by the spatial attributes are not completely matched, identification information in which the difference between distances between the positions falls within a predetermined range may be selected, or priority in execution of jobs may be allocated by rearrangement performed depending on the difference between the distances.

The order of the selecting process in step S202 and the selecting process in step S203 may be reversed. For example, identification information the spatial information of which is matched may be selected first to give priority depending on the time information. In this manner, pieces of identification information of one or more IC tags 1 are selected by the processes in steps S202 and S203.

The access control apparatus 5 accesses the IC tags 1 by using the antennas 3 on the basis of the selected identification information as the job executing process by the processes of the job selection executing unit 522 and the job command issuing unit 530 based on the control of the control unit 50 (S204). In step S204, more specifically, the selected identification information is designated to access the IC tag 1, and a job recorded on the tag table 53a in association with the identification information is executed. When pieces of identification information are selected in step S202 and S203, jobs are sequentially executed in the order of priority.

The access control apparatus 5 deletes a record corresponding to the identification information the job of which is executed is deleted from the tag table 53a by the process of the job management unit 523 on the basis of the control of the control unit 50 (S205). Even though the selection is performed by the process in steps S202 and S203, a record corresponding to the identification information the job of which cannot be executed due to failure of access is not deleted.

The access control apparatus 5 determines whether all the jobs are executed under control of the control unit 50 (S206). The determination in step S206, more specifically, is performed such that it is detected by scanning the tag table 53a whether the record the job of which is not executed is recorded.

When it is determined in step S206 whether all the jobs are executed (S206: YES), the access control apparatus 5 ends the job executing process under control of the control unit 50.

When it is determined in step S206 that some of the jobs are not executed (S206: NO), the access control apparatus 5 determines whether the antenna switching conditions are satisfied under control of the control unit 50 (S207). The process in step S207, more specifically, is determination for conditions serving as triggers of switching the antennas 3 such as time elapsed from when conveyance of the articles stuck with the IC tags 1 is started, time elapsed when the antennas 3 are switched at previous time, a moving distance detected by the sensor 6. More specifically, the determination is performed on the basis of information such as a moving speed measured by the speed measuring unit 540, positional relationships between the IC tags 1 and the antennas 3 calculated by the position calculating unit 550, and time indicated by the timer unit 56.

When it is determined in step S207 that the antenna switching conditions are satisfied (S207: YES), the access control apparatus 5 returns the control process to step S201 under control of the control unit 50 to select the antennas 3 again (S201). Subsequently, the above processes are repeated. In the selection at the stage in step S201, the antenna 3 arranged on the downstream side of the previous antenna 3 is selected.

When it is determined in step S207 that the antenna switching conditions are not satisfied (S207: NO), the access control apparatus 5 returns the control process to step S202 under control of the control unit 50 to select identification information again (S202). Subsequently, the above processes are repeated. Thereafter, a job is executed on the basis of identification information to be newly selected. In this manner, the job executing process is performed.

As described above, in the present invention, the identification information collecting process and the job executing process are executed while switching the antennas 3. It is assumed that the antenna used in the identification information collecting process is defined as a first antenna and that the antenna used in the job executing process. In this case, the second antenna is normally arranged on the downstream side of the first antenna with respect to the moving direction of the IC tags 1. However, the first antenna may function as the second antenna depending on switching timings.

Selection of identification information based on the time attribute and the spatial attribute will be described below in detail. In the identification information collecting process, time at which the antenna 3 is selected is defined as reference time, and it is assumed that time information Tt representing time elapsed from the reference time to time when access is gained is given as the time attribute. It is assumed that the IC tags 1 move at a predetermined speed and that the positional relationships between the antennas 3 and the IC tags 1 at the switching state are constant. In this case, when access is performed in a time zone in which the time elapsed from the antennas 3 are switched in the job executing process is close to the time indicated by the time information Tt, the probability of gaining the access may be increased. In the selection of the identification information based on the time attribute in the job executing process, it is assumed that a predetermined range related to time is shown as a fluctuation parameter ß (ß > 0) and that time elapsed from when the second antenna 3 used in the job executing process is denoted by T. In this case, identification information to which the time information Tt satisfying a condition expressed by the following expression (1) is given as a time attribute is selected.

$$\beta > \mathrm{Tt} - \mathrm{T} > - \beta \,...(1)$$

In the example, the time at which the antennas 3 are switched (selected) is defined as reference time, the time elapsed from the reference time is given as a time attribute and used in selection. However, a method of setting the reference time can be arbitrarily set. For example, when time at which the IC tag 1 passes through a position 50 cm away from the antenna 3 on the upstream side can be detected, the time is defined as the reference time, time elapsed from the reference time is given as a time attribute and can also be used in selection. More specifically, in the present invention, time at which a positional relationship between the antenna 3 which performs access and the IC tag 1 is a predetermined relationship is set as the reference time, and by using information related to time such as time elapsed from the reference time, in a time zone in which a positional relationship between the antenna 3 which performs access and a moving IC tag 1 falls within a predetermined range, access is performed from the antenna 3 to execute a job.

In the embodiment, it is assumed that position information representing a spatial attribute associated with identification information of the IC tag 1 is represented by St and that position information representing a position of the second antenna 3 which accesses the IC tag 1 is represented by Sa. In this case, in the job executing process described above, a mode in which the IC tags 1 associated with a spatial attribute satisfying Sa = St are selected is shown as an example. In the job executing process, the example in which identification information the distance between positions of which falls within a predetermined range is selected is as follows. That is, when it is assumed that a distance between positions indicated by both pieces of position information is denoted by d (Sa, St) and that the predetermined range of the distance is expressed as a fluctuation parameter γ (γ > 0), identification information to which position information Sa which satisfies a condition given by the following expression (2) is given as a spatial attribute is selected. In the selected pieces of identification information, a high priority order is given to identification information having a short distance d (Sa, St).

$$d\,(\mathrm{Sa},\,\mathrm{St}) \le \gamma ...(2)$$

An order of priority of the identification information selected on the basis of the time attribute and the spatial attribute with respect to all the IC tags 1 becomes higher as the order of priority of the spatial attribute is higher. When the order of priority of the spatial attribute does not change, the order of attribute of the identification information is higher as the order of priority of the time attribute is higher.

A distance between positions indicated by pieces of position information given as the spatial attributes can also be set as a parameter in advance. However, a mode in which the distance between the positions indicated by the pieces of position information is calculated by a mathematically generalized method will be described below. Definition of the spatial attribute will be described first. Since the spatial attribute means a position with respect to the moving direction of the IC tags 1, the spatial attribute is defined by one or two dimensions dim. The dimensions are defined as scales axis(i). For example, when the antennas 3 are arranged on the right and left and vertically arranged in three levels, dim = 2, axis 1 is defined as 0, 1, and 2 which indicate a low position, an intermediate position, and a high position, respectively, and axis2 is defined as 0 and 1 which indicate the right side and the left side, respectively. With respect to the dimension dim, orders of priority are given as, for example, dim1 > dim2 (or dim2 > dim1). Furthermore, positions s of the antennas 3 used as attribute information are defined as integers S which satisfy $0 \le s < axis(1)$ when dim = 1. When dim = 2 is satisfied, and when an integer satisfies $0 \le s(1) < axis(1)$ and $0 \le s(2) < axis(2)$, the positions s are defined as s = < s(1), s(2) >.

A distance between positions s1 and s2 indicated by position information given as spatial attributes is represented by d (s1, s2). In this case, dim = 1, the distance d (s1, s2) is given by the following equation (3).

$$d(s1, s2) = |\, s1 - s2\, | ...(3)$$

where |s| is an absolute value of s.

When dim = 2 is satisfied, s1 = < s1 (1), s1 (2) > and S2 = s2 (1), s2(2) > are defined, and orders of priority are defined as dim1 > dim2. In this case, the distance d (s1, s2) is given by the following equation (4).

$$d\,(s1, s2)$$

$$= d(s1(1), s2(1)) + 2 \times d\,(s1(2), s2(2))...(4)$$

As described above, the distance d can be calculated. For example, dim = 2, axis(1) = 3 (0: low position, 1: intermediate position, 2: high position), axis(2) = 2 (0: right side, 1: left side), and the orders of priority are given by dim1 > dim2. In this case, the distances d are given as follows:

$$d\,(< 1, 1 >, < 1, 1 >) = 0$$

$$d\,(< 1, 1 >, < 2, 1 >) = 1$$

$$d\,(< 0, 0 >, < 2, 0 >) = 2$$

$$d\,(< 0, 0 >, < 0, 1 >) = 2$$

$$d\,(< 0, 0 >, < 1, 1 >) = 3$$

In the embodiment described above, the mode in which jobs are executed after all pieces of identification information are collected is described. However, the present invention is not limited to the mode. For example, the mode can be developed into various modes such as a mode in which, after pieces of identification information are collected first, collection of remaining pieces of identification information and execution of jobs on the basis of the collected pieces of identification information are executed as interleaving processes.

The embodiment shows the mode using the time attribute and the spatial attribute. However, the present invention is not limited to the mode. For example, the mode can be developed into various modes such as a mode using only one of a time attribute and a spatial attribute and a mode additionally using an attribute except for the time attribute and the spatial attribute.

In this manner, the embodiment described above is only an example of a myriad of modes to realize the present invention. For example, it is assumed that a time attribute and/or a spatial attribute are given to an IC tag in a first access state and selection of an IC tag accessed in the next access state and determination of orders of priority are performed on the basis of the attributes given as described above. In this case, the present invention can be developed into various modes.

**Claims**

1. A communication method of accessing each of a plurality of IC tags (1) at least twice by using a plurality of antennas (3) arranged along a moving path of the IC tags (1), **characterized by** comprising:

   performing first access to each of the IC tags (1) by using some of the plurality of antennas (3);
   giving time information expressing time at which the first access to each of the IC tags (1) is gained to each of the IC tag (1) as a time attribute;
   selecting an IC tag (1) to be accessed on the basis of time at which second access to each of the IC tags (1) is performed by using some of the plurality of antennas (3) and the time attribute given to the IC tag (1); and
   performing the second access to the selected IC tag (1) by using an antenna (3) to be used in the second access.

2. A communication method of accessing each of a plurality of IC tags (1) at least twice by using a plurality of antennas (3) arranged along a moving path of the IC tags (1), **characterized by** comprising:

   performing first access to each of the IC tags (1) by using a first antenna (3) which is one of the plurality of antennas (3);
   giving time information expressing time at which the first access to each of the IC tags (1) is gained to each of the IC tag (1) as a time attribute;
   selecting an IC tag (1) to be accessed on the basis of time at which second access to each of the IC tags (1) is performed by using a second antenna (3) which is one of the plurality of antennas (3) and the time attribute given to the IC tag (1); and
   performing the second access to the selected IC tag (1) by using the second antenna.

3. A communication method of accessing each of a plurality of IC tags (1) at least twice by using a plurality of antennas (3) arranged along a moving path of the IC tags (1), **characterized by** comprising:

   performing first access to each of the IC tags (1) by using some of the plurality of antennas (3);
   giving position information expressing a position of an antenna (3) which gains the first access to the IC tag (1) with respect to a moving direction of the IC tags (1) to each of the IC tag (1) as a spatial attribute;
   selecting an IC tag (1) to be accessed on the basis of positions of antennas (3) which are some of the plurality of antennas (3) and a spatial attribute given to each of the IC tags (1); and
   performing the second access to the selected IC tag (1) by using an antenna (3) to be used in the second access.

4. A communication method of accessing each of a plurality of IC tags (1) at least twice by using a plurality of antennas (3) arranged along a moving path of the IC tags (1), **characterized by** comprising:

   performing first access to each of the IC tags (1) by using a first antenna (3) which is one of the plurality of antennas (3);
   giving position information expressing a position of an antenna (3) which gains the first access to the IC tag (1) with respect to a moving direction of the IC tags (1) to each of the IC tag (1) as a spatial attribute;
   selecting an IC tag (1) to be accessed on the basis of positions of second antennas (3) which are some of the plurality of antennas (3) and perform second access and a spatial attribute given to each of the IC tags (1); and
   performing the second access to the selected IC tag (1) by using the second antennas (3).

5. A communication system which includes a plurality of antennas (3) arranged along a moving path of an IC tag (1), and an access control apparatus (5) which causes the plurality of antennas (3) to access the IC tag (1) to access each of a plurality of IC tags (1) at least twice, **characterized in that** the access control apparatus (5) comprises:

   first access part (54) which causes a first antenna (3) which is one of the plurality of antennas (3) to perform first access to each of the IC tags (1);
   time information acquiring part (50) which acquires time information expressing time at which the first access using the first antenna (3) is gained for each of the IC tags (1);
   identification information recording part (53) which records the time information acquired by the time information acquiring part (50) and identification information for identifying each of the IC tags (1) in association with each other;
identification information selecting part (50) which selects identification information of an IC tag (1) to be accessed on the basis of time at which second access to each of the IC tags (1) is performed by using a second antenna (3) which is one of the plurality of antennas (3) and time information recorded for each of the IC tags (1); and second access part (54) which causes the second antenna (3) to perform the second access to each of the IC tags (1) on the basis of the identification information selected by the identification information selecting part (50).

6. A communication system which includes a plurality of antennas (3) arranged along a moving path of an IC tag (1), and an access control apparatus (5) which recognizes arranged positions of the plurality of antennas (3) and causes the plurality of antennas (3) to access each of a plurality of IC tags (1) at least twice, **characterized in that** the access control apparatus (5) comprises:

first access part (54) which causes a first antenna (3) which is one of the plurality of antennas (3) to perform first access to each of the IC tags (1);
identification information recording part (53) which records a position of the first antenna (3) which gains the first access with respect to a moving direction of each of the IC tags (1) as position information in association with identification information for identifying the IC tag (1),
identification information selecting part (50) which selects identification information of an IC tag (1) to be accessed on the basis of positions of a second antenna (3) which is one of the plurality of antennas (3) and performs second access with respect to moving directions of the IC tags (1) and position information recorded for each of the IC tags (1) by the identification information recording part (53); and
second access part (54) which causes the second antenna (3) to perform the second access to each of the IC tags (1) on the basis of the identification information selected by the identification information selecting part (50).

7. A communication system which includes a plurality of antennas (3) arranged along a moving path of an IC tag (1), and an access control apparatus (5) which recognizes arranged positions of the plurality of antennas (3) and causes the plurality of antennas (3) to access each of a plurality of IC tags (1) at least twice, **characterized in that** the access control apparatus (5) comprises:

first access part (54) which causes a first antenna (3) which is one of the plurality of antennas (3) to perform first access to each of the IC tags (1);
time information acquiring part (50) which acquires time information expressing time at which first access using the first antenna (3) is gained for each of the IC tags (1);
identification information recording part (53) which records the time information acquired by the time information acquiring part (50), position information expressing a position of the first antenna (3) with respect to a moving direction of each of the IC tags (1), and identification information for identifying the IC tags (1) in association with each other; and
identification information selecting part (50) which selects identification information of an IC tag (1) to be accessed on the basis of time at which second access to each of the IC tags (1) is performed by using a second antenna (3) which is one of the plurality of antennas (3), time information recorded for each of the IC tags (1), positions of the second antenna (3) with respect to moving directions of each of the IC tags (1), and position information recorded for each of the IC tags (1); and
second access part (54) which causes the second antenna (3) to perform the second access to each of the IC tags (1) on the basis of the identification information selected by the identification information selecting part (50).

8. The communication system as set forth in any one of claims 5 through 7, **characterized in that** the first access part (54) collects identification information of each of the IC tags (1), and the second access part (54) reads or writes information from/on each of the IC tags (1) on the basis of the identification information collected by the first access part (54).

9. An access control apparatus (5) which accesses each of a plurality of IC tags (1) at least twice through a plurality of antennas (3) arranged along a moving path of IC tags (1), **characterized by** comprising:

first access part (54) which causes a first antenna (3) which is one of the plurality of antennas (3) to perform first access to the IC tags (1);
time information acquiring part (50) which acquires time information expressing time at which the first access using the first antenna (3) is gained for each of the IC tags (1);

identification information recording part (53) which records the time information acquired by the time information acquiring part (50) and identification information for identifying each of the IC tags (1) in association with each other;

identification information selecting part (50) which selects identification information of an IC tag (1) to be accessed on the basis of time at which second access to each of the IC tags (1) is performed by using a second antenna (3) which is one of the plurality of antennas (3) and time information recorded on each of the IC tags (1); and second access part (54) which causes the second antenna (3) to perform the second access to each of the IC tags (1) on the basis of the identification information selected by the identification information selecting part (50).

10. An access control apparatus (5) which recognizes positions at which a plurality of antennas (3) are arranged along a moving path of IC tags (1) to access each of the plurality of IC tags (1) at least twice through the antennas (3), **characterized by** comprising:

identification information recording part (53) which records a position of the first antenna (3) which gains first access with respect to a moving direction of each of the IC tags (1) as position information in association with identification information for identifying the IC tags (1);

identification information selecting part (50) which selects identification information of an IC tag (1) to be accessed on the basis of positions of a second antenna (3) which is one of the plurality of antennas (3) and performs second access with respect to moving directions of each of the IC tags (1) and position information recorded for each of the IC tags (1) by the identification information recording part (53); and

second access part (54) which causes the second antenna (3) to perform the second access to each of the IC tags (1) on the basis of the identification information selected by the identification information selecting part (50).

11. A computer readable storage medium storing a program which access a plurality of IC tags (1) at least twice through a plurality of antennas (3) arranged along a moving path of the IC tags (1), the program causing a computer to function as:

acquiring time information expressing time at which first access using a first antenna (3) which is one of the plurality of antennas (3) is gained;

recording the acquired time information and identification information for identifying the IC tags (1) in association with each other;

selecting identification information of an IC tag (1) to be accessed on the basis of time at which second access to each of the IC tags (1) is performed by using a second antenna (3) which is one of the plurality of antennas (3) and time information recorded on each of the IC tags (1); and

performing second access to each of the IC tags (1) by using the second antenna (3) on the basis of the selected identification information.

12. A computer readable storage medium storing a program which access a plurality of IC tags (1) at least twice through a plurality of antennas (3) arranged along a moving path of the IC tags (1), the program causing a computer to function as:

recording a position of a first antenna (3) which gains the first access to each of the IC tags (1) and which is one of the plurality of antennas (3) with respect to a moving direction of each of the IC tags (1) as position information in association with identification information for identifying the IC tags (1);

selecting identification information of an IC tag (1) to be accessed on the basis of positions of a second antenna (3) which is one of the plurality of antennas (3) and which is used in second access with respect to moving directions of the IC tags (1) and position information recorded for each of the IC tags (1); and

performing second access to each of the IC tags (1) by using the second antenna (3) on the basis of the selected identification information.

FIG. 1A

FIG. 1B

ACCESS CONTROL APPARATUS

ACCESS CONTROL APPARATUS

EP 1 921 563 A2

FIG. 2

FIG. 2 diagram showing an IC TAG (1) containing CONTROL UNIT (10), RECORDING UNIT (11), COMMUNICATION UNIT (12), and ELECTROGENIC UNIT (13); an ANTENNA (3) communicating wirelessly with the IC TAG; and a READER/WRITER (4) containing CONTROL UNIT (40), MEMORY UNIT (41), ANTENNA CONTROL UNIT (42), and CONNECTION UNIT (43), which connects to an ACCESS CONTROL APPARATUS (5).

EP 1 921 563 A2

FIG. 3

ACCESS CONTROL APPARATUS

| 500 | |
|---|---|
| ACQUIRE TIME INFORMATION | |
| RECORD IDENTIFICATION INFORMATION ASSOCIATED WITH TIME INFORMATION | |
| SELECT IDENTIFICATION INFORMATION ON THE BASIS OF TIME INFORMATION | |
| ACCESS | |
| RECORD IDENTIFICATION INFORMATION ASSOCIATED WITH SPATIAL INFORMATION | |
| SELECT IDENTIFICATION INFORMATION ON THE BASIS OF SPATIAL INFORMATION | |
| ACCESS | |

CONTROL UNIT — 50

AUXILIARY STORAGE UNIT — 51

STORAGE UNIT — 52

MEMORY UNIT — 53

TAG TABLE — 53a

TIMER UNIT — 56

FIRST DEVICE CONTROL UNIT — 54

SECOND DEVICE CONTROL UNIT — 55

READER/WRITER — 4

SENSOR — 6

EP 1 921 563 A2

FIG. 4

| IDENTIFICATION INFORMATION | TIME INFORMATION (TIME ATTRIBUTE) | SPATIAL INFORMATION (SPATIAL ATTRIBUTE) | JOB |
|---|---|---|---|
| ******** | ******** | ******** | ******** |
| ******** | ******** | ******** | ******** |
| ******** | ******** | ******** | ******** |
| ******** | ******** | ******** | ******** |
| | | | |

EP 1 921 563 A2

FIG. 5

ACCESS CONTROL APPARATUS (5)

APPLICATION UNIT (510)

JOB EXECUTION CONTROL UNIT (520)
- TAG ATTRIBUTE GIVING UNIT (521)
- JOB SELECTION EXECUTING UNIT (522)
- JOB MANAGEMENT UNIT (523)

TIMER UNIT (56)

POSITION CALCULATING UNIT (550)

SPEED MEASURING UNIT (540)

SECOND DEVICE CONTROL UNIT (55)

MEMORY UNIT (53)
- TAG TABLE (53a)

JOB COMMAND ISSUING UNIT (530)

FIRST DEVICE CONTROL UNIT (54)

SENSOR (6)

READER/WRITER (4)

EP 1 921 563 A2

FIG. 6

$$C \leftarrow \Phi \quad \text{S101}$$

START

S102 SATISFY START CONDITION ?

NO

YES

SELECT ANTENNA S103

COLLECT IDENTIFICATION INFORMATION S104

RECORD IDENTIFICATION INFORMATION (D) S105

S106 $D \neq \Phi$ ?

NO

YES

$C \leftarrow C \cup D$ S107

ASSOCIATE JOB S108

ACQUIRE TIME INFORMATION S109

ASSOCIATE TIME ATTRIBUTE (TIME INFORMATION) S110

ASSOCIATE SPATIAL ATTRIBUTE (SPATIAL INFORMATION) S111

ADDITIONALLY RECORD IDENTIFICATION INFORMATION S112

S113 THE NUMBER OF ELEMENTS OF SET C = N ?

NO

S114 SATISFY ANTENNA SWITCHING CONDITION ?

NO

YES

YES

END

FIG. 7

START

SELECT ANTENNA     S201

SELECT IDENTIFICATION
INFORMATION BASE ON     S202
TIME ATTRIBUTE

SELECT IDENTIFICATION
INFORMATION BASE ON     S203
SPATIAL ATTRIBUTE

EXECUTE JOB     S204

DELETE IDENTIFICATION
INFORMATION     S205

S206

ALL THE
JOBS ARE EXECUTED    NO
?

YES

END

S207

SATISFY
ANTENNA SWITCHING    NO
CONDITION ?

YES

**EP 1 921 563 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006106897 A